# EUROPEAN PATENT APPLICATION

(11) **EP 4 079 145 A1**
(43) Date of publication of application: **26.10.2022**
(21) Application number: 22168893.0
(22) Date of filing: 19.04.2022
(51) Int. Cl.: A01G 9/28

(54) **MODULAR CONTAINMENT ELEMENT FOR GARDENS**

(30) Priority: 22.04.2021 IT 202100010127
(71) Applicant: Lightgreen S.r.l., 20836 Briosco MB (IT)
(72) Inventor: ROSSINI, Matteo, 20836 Briosco (IT)
(74) Representative: Perani & Partners S.p.A.

(57) **Abstract**

A modular containment element (1) for gardens comprises a frame (2) having a lower edge (2a), an upper edge (2b) and a pair of side edges (2c); a lower wall (3) extending rearward from the lower edge (2a); a rear wall (4) connected to the lower wall (3) and to the upper edge (2b) of the frame (2).

## Description

The present invention relates to a modular containment element for gardens. This modular element can be used in outdoor or indoor gardens, greenhouses, and in cultivation in general.

In the state of the art, gardens are known, especially raised gardens, i.e. where plants are raised above the surrounding ground.

More specifically, the raised garden is enclosed by vertical elements that define an internal volume. This internal volume is filled with soil, and then the plants that are to be grown are sown.

Disadvantageously, in such a system it is not possible to approach the crops beyond a certain limit. As a result, the farmer is obliged to keep his distance and bend his back forward. This causes discomfort and in the long run can have detrimental health consequences, in particular can cause low back pain.

### SUMMARY OF THE INVENTION

In this context, the technical task underlying the present invention is to propose a modular containment element for gardens which obviates the drawbacks in the prior art as described above.

In particular, it is an object of the present invention to provide a modular containment element for gardens capable of enabling improved ergonomics during plant care.

The defined technical task and the specified aims are substantially achieved by a modular containment element for gardens, comprising the technical characteristics set forth in one or more of the appended claims.

In particular, a modular element for gardens in accordance with the present invention comprises a frame having a lower edge and a pair of side edges. The modular element further comprises a lower wall extending rearward from the lower side of the frame. Two side walls extend rearward each from a respective side edge of the frame.

A rear wall is connected to the lower wall and to the upper edge of the frame. Each side wall is further connected to the rear wall.

This modular element solves the technical problem as the lower and rear wall define a free volume behind the frame. This volume can hold the farmer's feet, allowing him to get closer to the garden than would be possible with a simple vertical bulkhead. As a result, the farmer does not have to bend forward to reach the plants, which greatly improves comfort during vegetable care.

### LIST OF FIGURES

Further features and advantages of the present invention will become more apparent from the approximate and thus non-limiting description of a preferred, but non-exclusive, embodiment of a modular containment element for gardens, as illustrated in the accompanying drawings, wherein:
- Figure 1 is a front view of a first embodiment of a modular containment element for gardens according to the present invention;
- Figure 2 is a perspective view of a wall of a garden made of a plurality of modular containment elements for gardens of Figure 1;
- Figure 3 is a perspective view of a second embodiment of a modular containment element for gardens according to the present invention;
- Figure 4 is a perspective view of a garden made with a plurality of modular containment elements for gardens in Figure 2.

### DETAILED DESCRIPTION

With reference to the appended Figures, 1 denotes a modular containment element for gardens 100 according to the present invention.

The modular element 1 comprises a frame 2 having a lower edge 2a and a pair of side edges 2c. In use, the lower edge 2a is inserted into the ground outside the garden, and the side edges 2c are arranged substantially vertically.

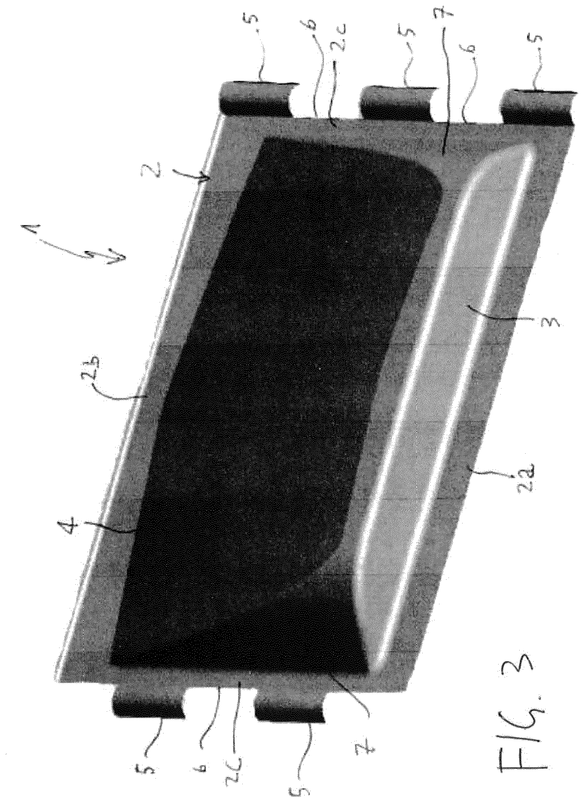

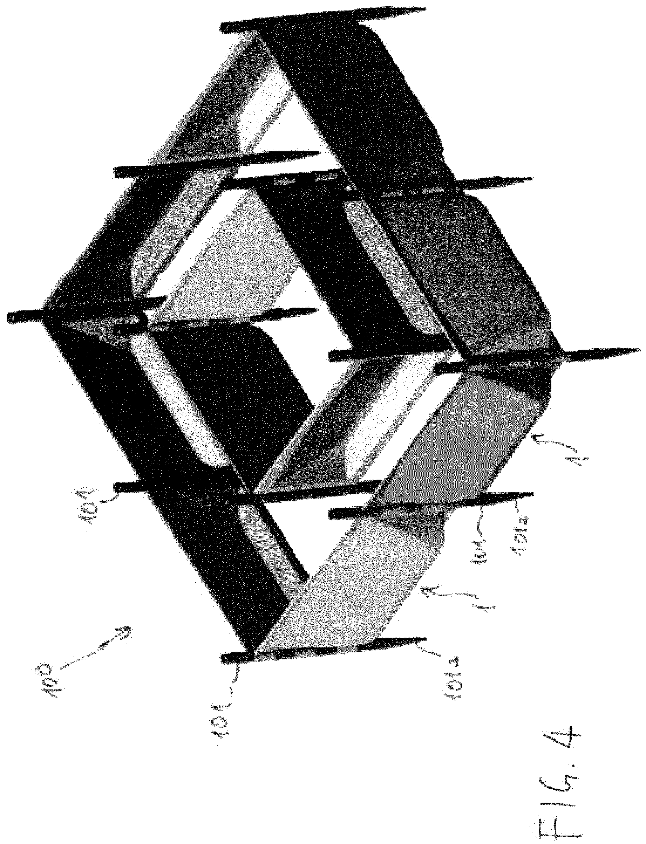

In the embodiment shown in Figures 3 and 4, the frame 2 also has an upper edge 2b. In this embodiment a single modular element extends over the entire height of the garden 100. Accordingly, the ground level within the garden 100 is between the height of the lower edge 2a and the height of the upper edge 2b, but will normally be closer to the latter.

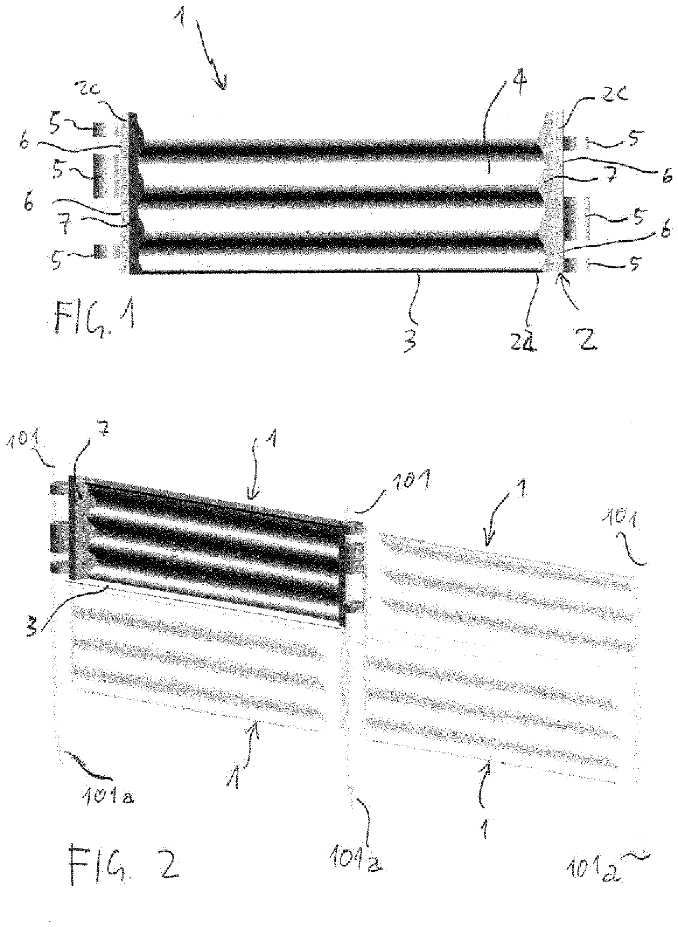

In contrast, the embodiment shown in Figures 1 and 2 has no upper edge. This type of modular element 1 is arranged to be stackable, as shown in particular in Figure 2.

The modular element 1 further comprises a lower wall 3 extending rearward from the lower edge 2a of the frame 2. This lower wall 3 is substantially flat.

In use, in the embodiment of Figures 3 and 4 the lower wall 3 is arranged substantially at ground level. In the embodiment of Figures 1 and 2, the lower wall 3 of the lower modular element 1 is also arranged substantially at ground level.

Advantageously, a grower can then go over the lower wall 3 with his feet, getting closer to the garden 100.

The modular element 1 further comprises a rear wall 4, which is connected to the lower wall 3 of the frame 2. In the embodiment shown in Figure 3, the rear wall 4 is connected directly to the upper edge 2b. In alternative embodiments, not illustrated, the rear wall 4 may be connected to the upper edge 2b indirectly through other elements, such as for example an upper wall.

The rear wall 4 in use extends at least in part along a vertical direction.

In the embodiment shown in Figures 1 and 2, the rear wall 4 is substantially vertical. Furthermore, in this embodiment, the rear wall 4 is undulating, i.e. it is defined by a succession of ridges and valleys oriented in particular in a substantially horizontal direction.

In the embodiment of Figure 3, the rear wall 4 is connected to the upper edge 2b of the frame 2. In other words, the rear wall 4 is oriented along an oblique direction, i.e. it is arranged transversely both with respect to the vertical direction and with respect to the lower wall 3. Furthermore, the rear wall 4 is substantially flat, and is joined to the lower wall 3.

In alternative embodiments, not illustrated, the rear wall 4 may have a slight curvature, may be concave or convex.

In the described embodiments, the angle between the rear wall 4 and the lower wall 3 is between 0 and 90°.

The modular element 1 further comprises a pair of side walls 7, each connected to the rear wall 4. Each side wall 7 extends rearward from a respective side edge 2c, and is in particular joined to the rear wall 4 and to the lower wall 3. With particular reference to the embodiment of Figure 1, the side walls 7 are flat and substantially vertical. In the embodiment shown in Figure 3, the side walls 7 are curved, particularly concave.

It should be noted that the modular element 1 is provided with a plurality of connecting portions 5, adapted to allow the fixing to the support posts 101. The connecting portions 5 are distributed along the side edges 2c of the frame 2.

In the embodiment of Figure 1, each connecting portion 5 has a cylindrical structure. In contrast, in the embodiment of Figure 3, each connecting portion 5 has a semi-cylindrical structure. In alternative embodiments, not illustrated, the connecting portions 5 may be of any shape, provided that they are complementary to the post 101 on which they are to be fixed.

Note that the connecting portions 5 along each side edge 2c are spaced apart from each other by an interval 6. In the embodiment of Figure 3, the interval 6 has a length at least equal to the length of the connecting portions 5.

In both illustrated embodiments, the connecting portions 5 on each side edge 2c are arranged in a complementary manner to the connecting portions 5 on the other side edge 2c. Advantageously, this allows two modular elements 1 to be fixed to a single post 101, since the connecting portions 5 of one of the two modular elements 1 will fit into the intervals 6 of the other modular element 1, and vice versa.

A modular kit for gardens 100 is also part of the present invention. With particular reference to Figure 2, the kit comprises a plurality of posts 101 which are adapted to be fixed in the ground. In particular, each post has a pointed lower end 101a which, in use, is fixed in the ground to firmly anchor the post 101.

The kit comprises a plurality of modular elements 1 of the type described above. Each modular element 1 is adapted to be connected to two posts 101, in particular through the aforesaid connecting portions 5. The fixing can be done in ways known to the person skilled in the art, for example by means of screws. In the embodiment shown in Figure 1, several modular elements 1 may be stacked to define a wall seedbed of the garden 100. In this case, the lowermost modular element 1 will have the concavity defined by the rear wall 4 facing outwards the garden 100, while in the uppermost one the concavity of the rear wall 4 will be facing inwards.

The number of modular elements 1 and posts 101 is variable according to the size and shape of the garden 100 to be made.

## Claims

1. Modular containment element (1) for gardens, **characterized in that** it comprises:
- a frame (2) having a lower edge (2a) and a pair of side edges (2c);
- a lower wall (3) extending rearward from the lower edge (2a);
- a pair of side walls (7) extending rearward each from a respective side edge (2c) of the frame (2);
- a rear wall (4) connected to said lower wall (3) and to said side walls (7);
**characterized in that** the rear wall (4) is inclined with respect to the lower wall and/or with respect to the frame (2).

2. Modular element (1) according to the preceding claim, **characterized in that** the angle between the rear wall (4) and the lower wall (3) is between 0 and 90°.

3. Modular element (1) according to any one of the preceding claims, **characterized in that** it comprises a plurality of connecting portions (5) connectable to posts (101) and distributed along the side edges (2c) of the frame (2).

4. Modular element (1) according to the preceding claim, **characterized in that** the connecting portions (5) on each side edge (2c) are arranged in a complementary manner to the connecting portions (5) on the other side edge (2c).

5. Modular element (1) according to any one of the preceding claims, **characterized in that** said rear wall (4) is undulating.

6. Modular element (1) according to any one of the preceding claims, **characterized in that** the frame (2) comprises an upper edge (2b), said rear wall (4) being connected directly to said upper edge (2b).

7. Modular kit for gardens, comprising a plurality of posts (101) adapted to be fixed in the ground, a plurality of modular elements (1) according to any one of the preceding claims, each adapted to be connected to two posts (101).

8. Modular kit for gardens according to the preceding claim, wherein each modular element (1) comprises a plurality of connecting portions (5) distributed along the side edges (2c) of the frame (2), each modular element (1) being adapted to be connected to respective posts (101) through said connecting portions (5).
